# EUROPEAN PATENT APPLICATION

(11) **EP 1 575 283 A2**
(43) Date of publication of application: **14.09.2005**
(21) Application number: 05250383.6
(22) Date of filing: 26.01.2005
(51) Int. Cl.: H04N 5/445

(54) **Video recording/reproducing apparatus and method of displaying menu guide thereof**

(30) Priority: 08.03.2004 KR 2004015574
(71) Applicant: SAMSUNG ELECTRONICS CO., LTD., Gyeonggi-do (KR)
(72) Inventor: Lee, Ju-yup, 321-1303 Sangrok Wooseong Apt., Seongnam-si Gyeonggi-do (KR)
(74) Representative: Robinson, Ian Michael

(57) **Abstract**

A video playback combo-system and method having at least three constituent device which can configure and display the languages used in the constituents in a single step. The method comprises the steps of selecting one language to be commonly used in the constituent devices, and transferring to the respective constituent devices a control signal instructing the selected language to be applied to each. The respective constituent devices reset a language to be used by using the transferred control signal, and then display a menu in the re-set language. By doing so, it is possible to control languages used in the respective constituent devices of the video playback combo-system using only a single key operation.

## Description

The present invention relates generally to a system for setting languages used in the respective devices combined into one system. More particularly, the present invention relates to an apparatus and a method for performing an integration management on languages used in the respective devices of a combination system.

Two or more different devices that are connected as a single integrated system are commonly referred to as 'a combination system' or 'combo-system' , and can be abbreviated as 'combo'. An example of such a combo-system is a DVDP/VCR combo-system that has been developed to allow DVDP functionality and VCR functionality to be performed together.

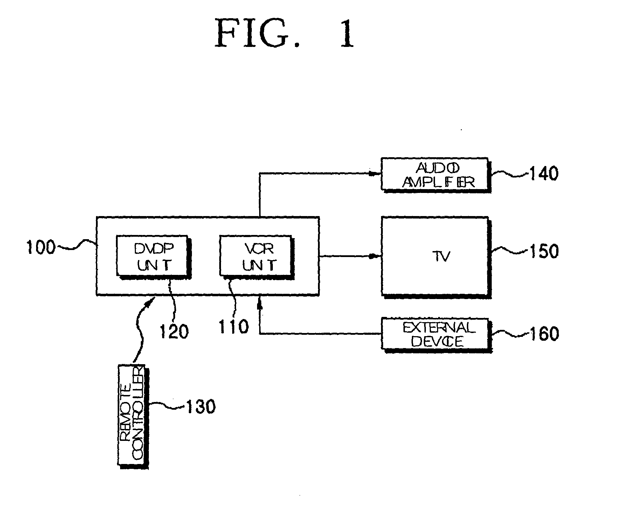

Figure 1 illustrates a DVDP/VCR combo-system and its associated peripheral devices. The DVDP/VCR combo-system 100 comprises a VCR unit 110 for performing general VCR functions such as a function for reproducing video and audio from a magnetic tape and a function for recording a received external signal on the magnetic tape, and a DVDP unit 120 for performing general DVDP functions such as a function for reproducing video and audio from a digital video disk (DVD). The DVDP/VCR combo-system 100 has the advantage of performing a function for recording video and audio reproduced from the DVDP unit 120 on the magnetic tape of the VCR unit 110, in addition to the independent functions of the VCR unit 110 and the DVDP unit 120.

The DVDP/VCR combo-system 100 is connected to a TV 150 which is a peripheral device for outputting the video and audio reproduced from the DVDP unit 120 or the VCR unit 110, and is also connected to an audio amplifier 140 which is a peripheral device for outputting the audio reproduced from the DVDP unit 120. Further, an external device 160 such as a camcorder, may be connected to the DVDP/VCR combo-system 100, and the DVDP/VCR combo-system 100 can receive video and audio signals from the external device 160 and perform recording/reproducing operations on the received video and audio signals.

The VCR unit 110 and the DVDP unit 120 constituting the DVDP/VCR combo-system 100, are a single system in appearance, and a user can operate a mode switching function between the VCR unit 110, the DVDP unit 120, and the individual functions of the units 110 and 120, by operating input devices such as a remote controller 130, and an operational panel (not shown) provided on a front side of the DVDP/VCR combo-system 100.

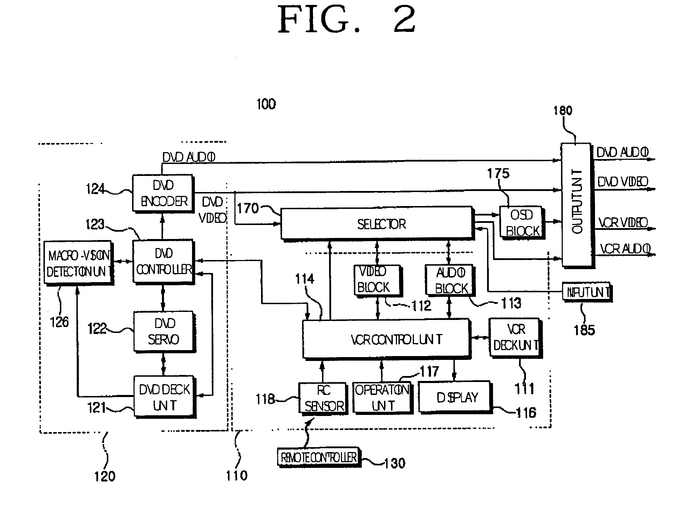

Figure 2 is a block diagram showing the detailed configuration of a combo-system, specifically the DVDP/VCR combo-system 100 capable of performing the functions of DVDP and VCR.

The DVDP/VCR combo-system 100 includes the VCR unit 110 for general VCR functions, the DVDP unit 120 for general DVDP functions, a selector for the selection of operations performed on signals output from the VCR unit 110 and the DVDP unit 120, an input unit 185 for supplying a signal input from the external device such as a camcorder, to the selector 170, and an output unit 180 for supplying the signals from the VCR unit 110 and the DVDP section 120 to peripheral devices such as a TV or an amplifier. The DVDP/VCR combo-system 100 further includes an OSD block 175 for adding OSD (on screen display) functionality to the video signals from the VCR unit 110 and the DVDP unit 120.

The VCR unit 110 comprises a VCR deck unit 111 for recording/reproducing the signal on/from the magnetic tape (not shown), a video block 112 and an audio block 113 for transmitting/receiving the video and audio signals to be recorded/reproduced with respect to the VCR deck unit 111, and a VCR control unit 114 for controlling the general operations of the VCR deck unit 111, the video block 112 and the audio block 113.

The VCR unit 110 also includes a display 116 for externally displaying conditions such as its operation and control, and further displaying a setup mode in order for a user to observe the conditions. The VCR unit 110 further includes an operation panel unit 117 for receiving various operational commands from the user, and a remote controller sensor 118 for receiving operational commands from the user via the remote controller 130.

The DVDP unit 120 includes a DVD deck unit 121, a DVD servo 122, a DVD controller unit 123, and a DVD encoder 124. The DVD deck unit 121 operates to read-out data from the DVD in order to perform the reproducing operation on the DVD, and the DVD servo 122 performs the positional control and speed control on the DVD deck unit 121. The DVD encoder 124 receives data that the DVD deck unit 121 reads out via the DVD controller unit 123, and outputs DVD video data and DVD audio data. The DVD controller unit 123 controls the overall operations of the DVD deck unit 121, the DVD servo 122, and the DVD encoder 124.

The DVDP unit 120 further comprises a macro-vision detection unit 126 for detecting a macro-vision signal. The macro-vision detection unit 126 detects the macro-vision signal of data read-out from the DVD deck 121 and provides it to the DVD controller unit 123 when reproducing or copying the DVD provided with a macro-vision protection. The DVD controller unit 123 then sends the detected macro-vision signal to the VCR control unit 114.

As described in greater detail below, the DVD controller unit 123 and the VCR control unit 114 cooperate according to the detected macro-vision signal and generate a signal for controlling the DVDP unit 120 and the VCR unit 110.

The selector 170 is input with the output of the DVD encoder 124, the outputs of the video block 112 and the audio block 113, and the signal from the input unit 185. The selector 170 selects the input signals according to the control of the VCR control unit 114 and the DVD controller unit 123. The output of the selector 170 is then input to the OSD block 175 and the output unit 180.

The OSD block 175 adds OSD function to the signal input from the selector 170. Thus, an additional video signal added to the video output to the TV screen is provided by the OSD block 175. The additional video signal includes a macro-vision error message and a menu for controlling the operations of the DVDP unit 120 and the VCR unit 110.

The output unit 180 receives signals from the DVD encoder 124, the selector 170 and the OSD block 175, and outputs signals related to DVD video, DVD audio, VCR video, and VCR audio. The output unit 180 is connected to the TV or the peripheral devices such as sound equipment, and hence, outputs the video and audio signals to the peripheral devices.

The input unit 185 is connected to the selector 170, and serves to send the external signal input to the selector 170. The signal output terminal of the external device, such as a camcorder, is connected to the input unit 185. Accordingly, the signal recorded on the external device may be sent to the combo-system 100 through the input unit 185, and may be recorded on the magnetic tape, or reproduced on a TV or a monitor by using the VCR unit 110.

A first example of a combo-system composed of the VCR unit and the DVDP unit has been described with reference to Figure 1 and 2. However, recently, a combo-system has been developed which includes a set-top box (STB) unit for receiving digital terrestrial television (DTT) broadcasting. Hereinafter, the STB for receiving DTT broadcasting is referred to as a DTT unit. In general, when re-setting the menu (for example, re-setting control languages used in the constituent device) of the VCR unit constituting the combo-system , the user re-sets the menu of the VCR by using the input device. When re-setting the menu of the DVDP unit constituting the combo-system, the user re-sets the menu of the DVDP by also using the input device. Also, when re-setting the menu of the STB unit, the same manner is applied. Therefore, the combo-system requires a user to individually re-set the menus of each respective constituent component. However, the combo-system should preferably re-set the menus common to the respective constituents using only a single operation.

Accordingly, a need exists for a system and method which can re-set the menus of the VCR, DVDP, DTT using only a single operation.

The present invention has been developed in order to solve the above and other problems associated with the conventional arrangement. An object of the present invention is to provide an approach that can control the languages used in the constituent devices of the combo-system using only a single operation.

Another object of the present invention is to provide an approach which can control the languages used in the constituent devices of the combo-system using only a single operation and thus, minimize the number of the manipulations of the combo-system.

According to the present invention there is provided an apparatus and method as set forth in the appended claims. Preferred features of the invention will be apparent from the dependent claims, and the description which follows.

In a preferred aspect of the present invention an integrated system is provided having at least two control units including a main-controller for receiving and processing video signals from at least two or more different video sources, and a method is provided for processing the setting on the system comprising the steps of: allowing the main-controller to output a menu screen including setting items common to the control units; allowing the main-controller to transfer respective setting contents selected by a user using a single operation to the control units; and allowing the control units to set the system according to the respective setting contents.

Also an integrated system is provided which has control units composed of a main-controller and at least one sub-controller for receiving and processing video signals from at least two or more different video sources. The integrated system comprises a main-controller for processing signals to be transferred from a first video source, and a sub-controller for processing signals to be transferred from a second video source, wherein the main-controller outputs a menu screen including setting items common to the control units, and sets the menu screen according to the setting contents selected by a user. The main-controller concurrently transfers the setting contents to the sub-controllers, and the sub-controller sets the system according to the setting contents.

The above objects and features of the present invention will be more apparent by describing certain embodiments of the present invention with reference to the accompanying drawings, in which:
Figure 1 is a block diagram illustrating the schematic structure of a combo-system composed of a VCR unit and a DVDP unit;
Figure 2 is a block diagram showing the detailed structure of the combo-system shown in Figure 1;
Figure 3 is a block diagram illustrating the structure of the combo-system composed of a VCR unit, DVDP unit, and DTT unit according to an embodiment of the present invention;
Figure 4 is a view illustrating the structure of the operation unit (such as a remote controller) of the combo-system composed of a VCR unit, DVDP unit, and DTT unit according to an embodiment of the present invention;
Figure 5 is a view illustrating the menu of "SETUP" according to an embodiment of the present invention; and
Figure 6 is a view illustrating the sub-menu of "Language" according to an embodiment of the present invention.

Throughout the drawings, like reference numerals will be understood to refer to like parts, components and structures.

Certain embodiments of the present invention will now be described in greater detail with reference to the accompanying drawings.

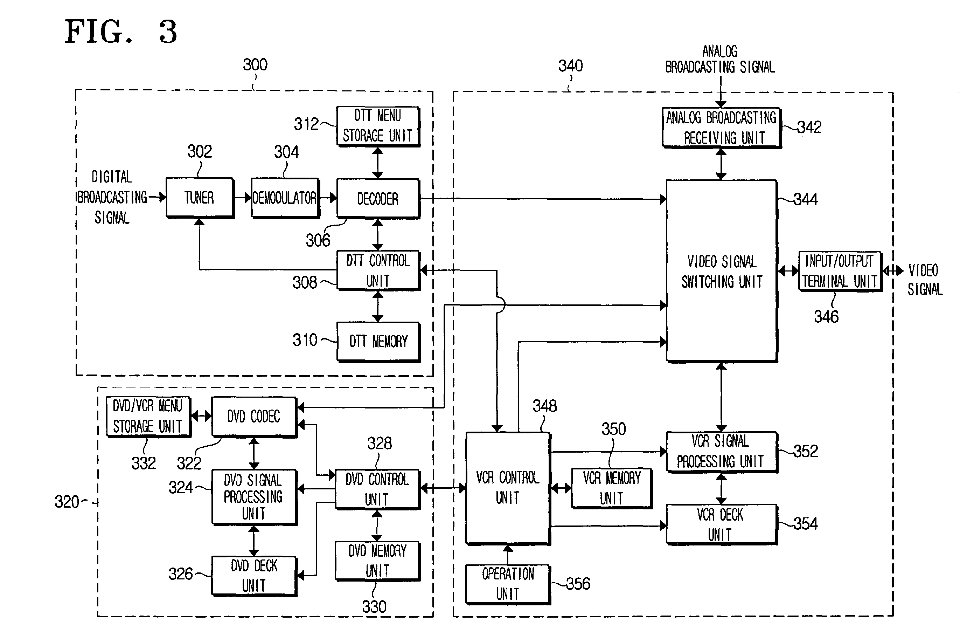

Figure 3 is a block diagram illustrating an example structure of the combo-system according to an embodiment of the present invention, which includes a VCR unit, a DVDP unit, and a DTT unit. The exemplary embodiment described herein includes, for example, the combo-system including a VCR unit, DVDP unit, and DTT unit, but it is not limited to this example only. That is, the present invention may include any combination of available devices that can receive video signals from at least two video sources and reproduce these signals.

The DTT unit includes an STB, which is a device connecting cable broadcasting or satellite broadcasting to a TV in a home for receiving the cable or satellite broadcasting. The STB amplifies a video signal received from an antenna, or eliminates noise from the received video signal, and sends out a corresponding video signal in conformity with the user's desired channel to a TV.

Figure 3 is a block diagram of the combo-system according to an embodiment of the present invention. With reference to Figure 3, the combo-system includes a DTT (digital terrestrial television) unit 300, a DVDP (digital video disk player) unit 320, and a VCR (video cassette recorder) unit 340.

The DTT unit 300 is a digital broadcasting receiving STB (set-top box) for selecting and demodulating a digital broadcasting signal introduced from an outside source. The DVDP unit 320 is an apparatus for recording/reproducing video data in/from an optical recording medium such as CD (compact disk), DVD, and the like.

The VCR unit 340 is an apparatus for recording/reproducing video data in/from a magnetic recording medium such as VCR tape. Also, the VCR unit 340 may perform the function of selecting and demodulating an analog broadcasting signal introduced from an outside source.

The DTT unit 300, DVDP unit 320, and VCR unit 340 are integrated into a casing. Accordingly, the combo-system appears externally as a single device. It is therefore possible to implement the connecting terminals of the user's input devices and the external devices in an integrated manner in such a combo-system.

The DTT unit 300, DVDP unit 320, and VCR unit 340 included in the combo-system can operate individually, together, or in any combination with each other. An example of the composite function may include a case where the digital broadcasting signal received from the DTT unit 300 is recorded in the DVDP unit 320 or the VCR unit 340, or a case where the video data reproduced from the DVDP unit 320 is recorded in the VCR unit 340.

The combo-system may be connected to the external devices such as TV or a camcorder (not shown). In this case, the combo-system may output the received broadcasting signal or the reproduced video signal to the external devices. Also, the combo-system may receive and record the video signal output from the external devices.

The combo-system is not required to include all of the units, such as the DTT unit 300, DVDP unit 320 and VCR unit 340 described in the above example. It is further possible to implement the above-described units 300, 320, and 340 in a coupling/decoupling manner in the above combo-system, and implement the above-described units 300, 320, and 340 to be selectively included in the combo-system according to the user's selection or requirements.

As an example, the DTT unit 300 is not necessary for the user who possesses a digital broadcasting receiving TV. Thus, in this case, it is possible to implement the combo-system without the DTT unit 300.

Hereinafter, the DTT unit 300, DVDP unit 320, and VCR unit 340 will be described in greater detail. First, the DTT unit 300 will be described in greater detail.

The DTT unit 300 includes a tuner 302, a demodulator 304, a decoder 306, a DTT control unit 308, a DTT memory unit 310, and a DTT menu storage unit 312.

The tuner 302 selects the channel selected by the user from a plurality of digital broadcasting signals introduced from a terrestrial wave source, satellite source, cable source, or the like.

The demodulator 304 demodulates the digital broadcasting signal output from the tuner 302, and demultiplexes the demodulated broadcasting signal into a video signal, audio signal, and broadcasting information signal.

The decoder 306 then decodes the demultiplexed video signal, audio signal, and broadcasting information signal. The video and audio signals output from the demodulator 304 are signals subjected to the compression processing in a prescribed format. Accordingly, the decoder 306 expands the compressed video and audio signals and outputs the signals. The compressed video and audio signals are typically in MPEG (Moving Picture Expert Group) format.

The video and audio signals output from the decoder 306 are converted into a format reproducible by the external devices, such as a TV, through a DTT converting unit (not shown). Also, the decoder 306 expands GUI (Graphic User Interface) data that is compressed and stored in the DTT menu storage unit 312 described below, and outputs the resultant signals.

The DTT control unit 308 controls the general operations of the DTT unit 300. Specifically, the DTT control unit 308 controls the channel selection operation of the tuner 302, and the decoding operation of the decoder 306. The DTT control unit 308 is communicatively connected to the VCR control unit 348 which is described in greater detail below, and operates under the control of the VCR control unit 348.

The DTT memory unit 310 can be used to store information such as start-up programs and application programs necessary for the DTT control unit 308, and the essential data to be preserved even when the power is off. Also, GUI data, such as a menu screen necessary for establishing GUI environment, can be stored in the DTT menu storage unit 312. As necessary (for example, in the case of data having a large capacity), GUI data may be compressed in a prescribed format and stored. A compression format such as an MPEG format, JPEG (Joint Photographic Expert Group) format, or the like may be applied.

The DVDP unit 320 of Figure 3 comprises a DVD CODEC (COrder/DECoder) 322, a DVD signal processing unit 324, a DVD deck unit 326, a DVD control unit 328, a DVD memory unit 330, and a DVD/VCR menu storage unit 332.

The DVD deck unit 326 writes data to an inserted CD or DVD, or reads-in data written in the CD or DVD. The DVD signal processing unit 324 performs a signal processing, such as an error correction, on data to be recorded and which is applied to the DVD deck unit 326, or data to be reproduced and which is received from the DVD deck unit 326.

The DVD CODEC 322 compresses data to be written in a prescribed format signal and applies it to the DVD signal processing unit 324. When the DVD CODEC 322 receives data to be reproduced from the DVD signal processing unit 324, it expands and outputs the received data. An MPEG format may be applied as the compression format used. The expanded data output from the DVD CODEC 322 is converted into a format reproducible by the external devices, such as TV, through the DVD converting unit (not shown). Also, the DVD CODEC 322 expands and outputs GUI data that is stored in a compressed format in the DVD/VCR menu storage unit 332 which is described in greater detail below.

The DVD control unit 328 controls the general operations of the DVDP unit 320. Specifically, the DVD control unit 328 controls the compression/expansion operations of the DVD CODEC 322, the signal processing operations of DVD signal processing unit 324, and the recording/reproducing operations of the DVD deck unit 326. The DVD control unit 328 is communicatively connected to the VCR control unit 348 which is described in greater detail below, and operates under the control of the VCR control unit 348.

Start-up programs and application programs necessary for the DVD control unit 328, and the essential data to be preserved even when the power is off, are stored in the DVD memory unit 330.

Other information, such as GUI data associated with the DVDP unit 320 along with GUI data related to the VCR unit 340, is stored in the DVD/VCR menu storage unit 332. If necessary, the respective GUI data may be compressed in a prescribed format such as an MPEG format or JPEG format, and then stored.

The VCR unit 340 comprises an analog broadcasting receiving unit 342, a video signal switching unit 344, an input/output terminal unit 346, a VCR signal processing unit 352, a VCR deck unit 354, a VCR control unit 348, a VCR memory unit 350, and an operation unit 356.

The analog broadcasting receiving unit 342 selects the channel selected by the user from a plurality of analog broadcasting signals introduced from outside sources, and then demodulates and outputs the selected broadcasting signal. The VCR deck unit 354 writes data to an inserted magnetic tape, or reads-in the written data from the magnetic tape.

The VCR signal processing unit 352 converts data to be written and which is applied to the VCR deck unit 354 into a format recordable by the magnetic tape. Also, the VCR signal processing unit 352 converts data to be reproduced and which is received from the VCR deck unit 354 into a format reproducible by the external devices such as a TV (not shown).

The video signal switching unit 344 selectively sends the video signals output from the DTT unit 300, the DVD unit 320, the analog broadcasting receiving unit 342, and the VCR signal processing unit 352, to the input/output terminal unit 346. The video signal switching unit 344 also selectively sends the video signals transmitted from the external devices via the input/output terminal unit 346 to the DVDP unit 320 and the VCR signal processing unit 352.

The video signal switching unit 344 may be implemented using a MUX IC having a multiplexing function. The video signal switching unit 344 is provided to establish the transmission paths of the video signals described above, under the control of the VCR control unit 348.

The input/output terminal unit 346 sends the video signal output from the video signal switching unit 344 to the external devices, and sends the video signal output from the external devices to the video signal switching unit 344.

The VCR control unit 348 controls the general operations of the combo-system according to the user's operation commands input via the operation unit 356. The VCR control unit 348 is communicatively connected to the DTT controller 308 and the DVD control unit 328, and controls the control operations of each. Accordingly, the VCR control unit 348 is provided to operate as a main control unit that is in charge of the core functions of the combo-system.

When the user's operation command is related to the operation of the VCR unit 340, the VCR control unit 348 controls the operation of the VCR unit 340 accordingly. Specifically, the VCR control unit 348 controls the receiving operation of the analog broadcasting receiving unit 342, the switching operation of the video signal switching unit 344, the signal processing operation of the VCR signal processing unit 352, and the recording/reproducing operations of the VCR deck unit 354.

When the user's operation command is related to the operation of the DTT unit 300 or the DVDP unit 320, the VCR control unit 348 sends the operation command to the DTT control unit 308 or the DVD control unit 328, respectively. The DTT control unit 308 or the DVD control unit 328 that is input with the operation command, then performs the control operation accordingly.

Start-up programs and application programs necessary for the VCR control unit 348, and the essential data to be preserved even when the power is off, are stored in the VCR memory unit 350. Further, the programs related to the general functions and composite functions of the combo-system are also stored in the VCR memory unit 350.

The operation unit 356 is a user interface device for receiving the operation commands related to the function selection and the operation control on the combo-system. The operation unit 356 is typically provided on the front side of the combo-system. The operation unit 356 may be implemented as a remote controller for inputting the user's operation commands, and a remote controller receiving unit for sending the output signal of the remote controller to the VCR control unit 348.

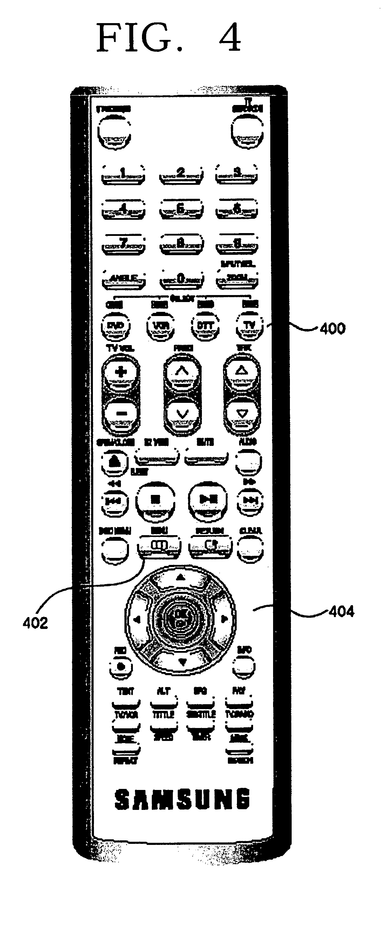

Figure 4 illustrates a remote controller example of the operation unit of the combo-system. The remote controller comprises key buttons for transmitting particular information to the combo-system. In addition to the key buttons shown in Figure 4, other key buttons may be added to the remote controller according to the user's setting. Hereinafter, only those key buttons related to the embodiments of the present invention will be described in greater detail.

The key buttons 400 are associated with the respective devices of the combo-system and are provided for controlling the respective devices. When the DVD button of the key buttons 400 is operated, the remote controller controls the DVD unit 320. When the VCR button of the key buttons 400 is operated, the remote controller controls the VCR unit 340. When the DTT button of the key buttons 400 is operated, the remote controller controls the DTT unit 300. When the TV button of the key buttons 400 is operated, the remote controller controls the TV (not shown).

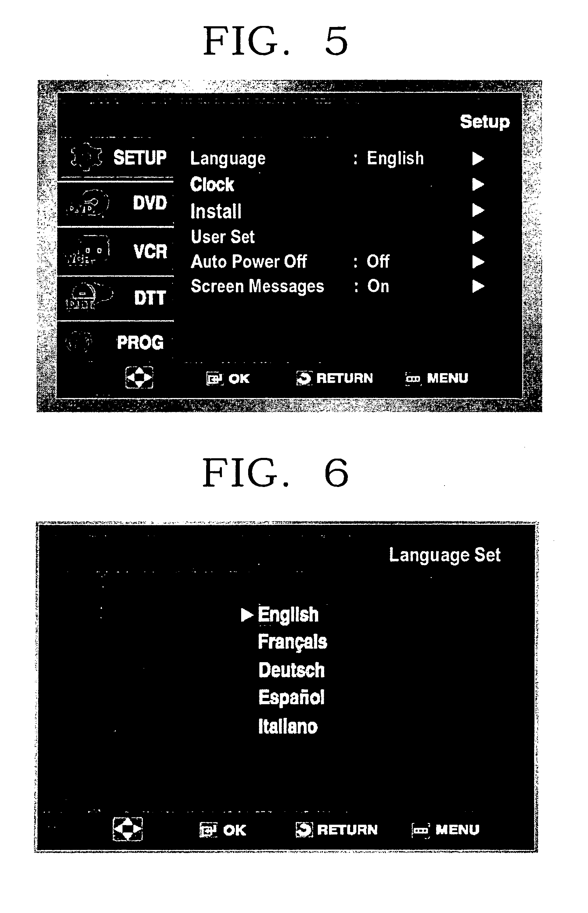

The key buttons 400 include a menu key 402, which will be described in greater detail below, and a navigation key 404, which is a directional key indicating left, right, top, and bottom, used for directing the cursor's movement for the menus which are classified and listed on the menu guide list screen. Hereinafter, a description will be made of an example method for controlling all of the devices constituting the combo-system using a single key operation according to an embodiment of the present invention. Specifically, an example method is proposed for integrating and setting languages used in each of the devices by using the apparatus of Figure 3 via displays as shown in Figure 5 and Figure 6.

Generally, the user of the combo-system controls the menus of the VCR unit 340, DVDP unit 320, and DTT unit 300 by using a single language. If different languages are used in each of the devices, the setting process will increase as the number of the devices constituting the combo-system is increased.

Figure 5 illustrates a provided display screen where the menu key 402 of the remote controller is operated. When the user operates the menu key 402, the menus of "SETUP", "DVD", "VCR", "DTT", "PROG" are displayed on the screen. Accordingly, if the number of the devices constituting the combo-system is increased, the number of the menus displayed on the screen is also increased.

When the user selects the "SETUP" menu, the sub-menus for the "SETUP" menu are displayed. The user can select the "SETUP" menu by operating the "OK" key disposed in a center position of the navigation key 402 of Figure 4. The sub-menus may include "Language", "Clock", "Install", "User Set", "Auto Power Off", "Screen Message", and the like.

The "Language" sub-menu describes the language used for the menus of the respective devices constituting the combo-system. The "Clock" sub-menu denotes information on the time set in the combo-system. The time information includes years, months, days, hours/minutes/seconds, and days of the week. Table 1 below shows an example of the sub-menus constituting the "SETUP" menu and the elements for the respective sub-menus.

**Table 1**

| Sub-Menu | Sub-Menu Element |
|---|---|
| Language | English |
| | French |
| | Deutsche |
| | ... |
| Clock | Time (hour/minute/second) |
| | Date |
| | Year |
| Install | Auto Setup |
| | Manual Setup |
| | TV System |
| | VCR Output CH |
| | ... |
| User Set | Color System |
| | NICAM |
| | IPC |
| | Showview Extend |
| | ... |
| Auto Power Off | Off |
| | 1 Hour |
| | ... |
| Screen Messages | ON |
| | OFF |
| | |

A detailed description of all sub-menus shown in Table 1 above will be omitted since all do not form the principals of the present invention. With reference to Figure 5, the "Language" sub-menu is shown as set to "English". Accordingly, as shown in Figure 5, all of the menus are then displayed in English. The information on "Language" set in the "SETUP" menu is then equally applied to the "DVD", "VCR", and "DTT" menus for each device. Thereafter, when the user of the combo-system selects one of "DVD", "VCR", and "DTT", the selected menu and the sub-menus are also displayed in English.

The user of the combo-system can move a cursor to "Language", and then re-set the "Language" by operating the "OK" key or the navigation key. Figure 6 shows a screen that is exhibited after the user of the combo-system operates the "OK" key to re-set the "Language".

The user of the combo-system can re-set a desired "Language" by operating the navigation keys. The "Language" which is re-set by the user is then equally applied to the "DVD", "VCR", and "DTT" menus for each device, as described above.

As described in the above exemplary embodiments, the present invention can control all of the languages used in the components constituting a video playback system using only a single key operation. Therefore, the user can operate the video playback system with minimized operation.

The foregoing embodiments and advantages are merely exemplary and are not to be construed as limiting the present invention. The present invention can be readily applied to other types of apparatuses. Also, the description of the embodiments of the present invention is intended to be illustrative, and not to limit the scope of the claims, and many alternatives, modifications, and variations will be apparent to those skilled in the art.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method for processing a setting in an integrated system having at least two control units (300, 320, 340) including a main-controller (340) for receiving and processing video signals from at least two or more different video sources, comprising the steps of:
controlling the main-controller (340) to output a menu screen including setting items common to the control units (300, 320, 340);
controlling the main-controller (340) to then transfer respective setting contents selected by a user in a single operation to the control units (300, 320, 340); and
controlling the control units (300, 320, 340) to set the system settings according to the respective setting contents.

2. The method as claimed in claim 1, wherein the setting items common to the control units (300, 320, 340) include a language setting.

3. The method as claimed in claim 2, wherein the integrated system comprises a DVDP and STB.

4. The method as claimed in claim 2 or 3, further comprising providing the setting items common to the control units (300, 320, 340) as a sub-menu, the sub-menu comprising at least one language selection.

5. The method as claimed in claim 4, further comprising setting the language sub-menu to a first desired language selection.

6. The method as claimed in claim 5, further comprising setting the language sub-menu to the first desired language selection using a navigation key.

7. The method as claimed in claim 4, 5 or 6, further comprising applying the first desired language selection to each said setting item common to the control units (300, 320, 340).

8. The method as claimed in claim 4, 5, 6 or 7, further comprising re-setting the language sub-menu to a second desired language selection.

9. An integrated system having a plurality of control units (300, 320, 340) including a main-controller (340) and at least one sub-controller (300, 320) for receiving and processing video signals from at least two or more different video sources, the system comprising:
a main-controller (340) for processing signals to be transferred from a first video source; and
a sub-controller (300, 320) for processing signals to be transferred from a second video source, wherein the main-controller (340) outputs a menu screen including setting items common to the control units (300, 320, 340), and sets the menu screen according to the setting contents selected by a user in a single operation and concurrently transfers the setting contents to the sub-controllers (300, 320), wherein the sub-controllers (300, 320) set the system according to the setting contents.

10. The system as claimed in claim 9, wherein the setting items common to the control units (300, 320, 340) include a language setting.

11. The system as claimed in claim 9 or 10, wherein the integrated system comprises a DVDP and STB.

12. The system as claimed in claim 9, 10 or 11, wherein the setting items common to the control units (300, 320, 340) are provided as a sub-menu, the sub-menu comprising at least one language selection.

13. The system as claimed in claim 12, further comprising a navigation device (400) provided to set the language sub-menu to a first desired language selection.

14. The system as claimed in claim 13, wherein the first desired language is applied to each said setting item common to the control units (300, 320, 340) selection.
